# EUROPEAN PATENT APPLICATION

(11) **EP 2 052 621 A2**
(43) Date of publication of application: **29.04.2009**
(21) Application number: 09150074.4
(22) Date of filing: 17.01.2002
(51) Int. Cl.: A23C 9/15, A23C 20/00, A23C 9/18

(54) **Method for preparing solid milk product**

(30) Priority: 29.01.2001 US 771858
(62) Divisional of application: 02250320.5
(71) Applicant: Kraft Foods Global Brands LLC, Northfield, Illinois 60093 (US)
(72) Inventor: Smith, Gray F., Highland Park, IL 60035 (US); Hansen, Timothy S., Chicago, IL 60657 (US); Menaker, Todd J., Chicago, IL 60610 (US)
(74) Representative: Smaggasgale, Gillian Helen

(57) **Abstract**

The present invention provides a method of preparing a solid milk product having a moisture level of less than about 40 percent and a fat/protein ratio of less than about 2.5, and preferably a moisture level of about 10 to about 30 percent and a fat/protein ratio of less than about 2. More preferably, the solid milk product has a fat/protein ratio of about 0.5 to about 1.5 and, even more preferably, about 1 to about 1.2. The present solid milk product is a high solids, low moisture, high-protein, shelf-stable milk product which is solid at ambient temperatures. A solid milk product of the present invention comprises about 15 to about 60 percent condensed fat-free milk or sweetened condensed fat-free milk; about 8 to about 40 percent anhydrous milkfat; about 1 to about 45 percent non-fat dry milk powder; 0 to about 3 percent sodium citrate, disodium phosphate, or mixtures thereof; 0 to about 1 percent TiO₂; and 0 to 1 percent emulsifier, wherein the solid milk product is a solid at ambient temperatures, has a moisture level of less than about 40 percent, and has a fat/protein ratio of less than about 2.5.

## Description

### Field of the Invention

The present invention generally relates to a method for preparing a solid milk product. More specifically, the present invention relates to a process for preparing a solid milk product having a moisture level of less than about 40 percent and a fat/protein ratio of less than about 2.5. The present invention also relates to a solid milk product which is a solid at ambient temperatures, has a moisture level of less than about 40 percent, and has a fat/protein ratio of less than about 2.5.

### Background of the Invention

Dairy products such as liquid milk which are high in protein can form an important part of a nutritious diet. Unfortunately, many people do not generally consume liquid milk in sufficient quantities for a number of reasons. Thus, there has been considerable effort to prepare milk-based products in solid form which are more convenient to consume.

Barta, United States Patent 4,497,834 (February 5, 1985) provided a simplified process for preparing a nutritious dairy-based product. This process involved condensing fatted or defatted milk to essentially the solids and moisture content desired in the final product, reducing the lactose content to below about 15 percent, and then cooking the mixture to produce, upon cooling, a gel-like material. If desired, fat could be added to a level of about 5 to 40 percent. The moisture content of the gel-like material was generally less than about 50 percent. However, to achieve low moisture levels, Barta was required to add significant levels of fat. Based on the reported examples in Barta, for example, a 48 percent moisture level product would have a fat/protein ratio of about 1.1; a 30 percent moisture level product would have a fat/protein ratio of about 6.2; and a 15 percent moisture level product would have a fat/protein ratio of about 19.6. Thus, Barta was only able to obtain relatively low moisture levels by significantly increasing the fat/protein ratios. Of course, such high fat/protein ratios result in a less desirable high-fat product, thereby significantly reducing the nutritional characteristics of the product.

Cillario, U.S. Patent 4,298,625 (November 3, 1981) provided a low moisture foam consisting of an oil-in-water emulsion prepared from edible fat, milk proteins, water, and optionally added sugars. Cillario was able to produce both "creamy" (i.e., viscosity of about 400,000 cps (about 400 Pa-sec)) and "paste-like (i.e., viscosity of about 3,500,00 cps (about 3,500 Pa-sec)) products with moisture levels of about 17 to about 35 percent. Fat/protein ratios for both the creamy and paste-like products generally ranged from about 3.9 to about 12, with the "optimum" ratios reported at about 7 to about 7.5. Of course, such high fat/protein ratios result in a less desirable high-fat product, thereby significantly reducing the nutritional characteristics of the product.

It would be desirable, therefore, to produce solid milk products having low moisture levels as well as low fat/protein ratios. The present invention provides such solid milk products and methods for producing such solid milk products.

### Summary of the Invention

The present invention provides a method of preparing a solid milk product having a moisture level of less than about 40 percent and a fat/protein ratio of less than about 2.5, and preferably a moisture level of about 10 to about 30 percent and a fat/protein ratio of less than about 2.0. More preferably, the solid milk product has a fat/protein ratio of about 0.5 to about 1.5 and, even more preferably, about 1 to about 1.2. Generally, the solid milk product of the present invention has less than about 50 percent added sweetener (e.g., sugar), preferably about 12 to about 35 percent added sweetener, and more preferably about 25 to about 35 percent added sweetener. Generally, the total sweetener (i.e., added sweetener plus sugars added with other ingredients) is less than about 57 percent, preferably about 25 to about 52 percent, and more preferably about 25 to about 40 percent.

The present solid milk product is a high solids, low moisture, high-protein, shelf-stable milk product which is solid at ambient temperatures. Thus, the present product can be conveniently transported and consumed by hand. Moreover, the present product can be produced in various forms - for example, solid bars, candy-type bars, cookies, cookies or bars with other ingredients (e.g., granola, grains, peanuts, other nuts, chocolate bits or chips, and the like), bite-sized forms or pieces, enrobed solid forms, shapes (e.g., animal, stars, letters), and the like - and can be produced with varying levels of sweetness. The present product can also be produced in an aerated form.

The present invention provides a method for preparing a solid milk product, said method comprising:
(1) blending an aqueous liquid, an edible fat, and concentrated milk protein source at a temperature of about 40 to about 95°C and under high shear conditions with a bulk peak shear rate of greater than about 950 sec⁻¹ to form a first blend, wherein the blending continues until essentially all components in the first blend are hydrated and wherein the edible fat has a melting point less than about 50 °C;
(2) adding 0 to 1 percent of an emulsifier to the first blend either before or after essentially all components in the first blend are hydrated;
(3) adding, once essentially all components in the first blend are hydrated, 0 to about 3 percent of an emulsifying salt and 0 to about 1 percent TiO₂ to form a second blend;
(4) continuing to heat the second blend to the temperature of about 65 to about 95°C under the high shear conditions until a homogeneous paste is obtained;
(5) pasteurizing the homogenous paste; and
(6) cooling the pasteurized homogenous paste to form the solid milk product,
wherein the relative amount of the aqueous liquid, the edible fat, and the concentrated milk protein source in the first blend are adjusted such that the solid milk product has a moisture level of less than about 40 percent and a fat/protein ratio of less than about 2.5 and wherein the solid milk product is a solid at ambient temperatures.

The present invention also provides a method for preparing a solid milk product having a moisture level of less than about 40 percent, said method comprising:
(1) blending an aqueous liquid, an edible fat, and concentrated milk protein source at a temperature of about 40 to about 95°C and under high shear conditions with a bulk peak shear rate of greater than about 950 sec⁻¹ to form a first blend, wherein the blending continues until essentially all components in the first blend are hydrated and wherein the edible fat has a melting point less than about 50°C;
(2) adding 0 to about 1 percent of an emulsifier to the first blend either before or after essentially all components in the first blend are hydrated;
(3) added 0 to about 3 percent of an emulsifying salt and 0 to about 1 percent TiO₂ to the first blend to form a second blend; wherein, if the moisture level of the solid milk product is to be greater than about 25 percent, the emulsifying salt and the TiO₂ are added to the first blend either before or after essentially all components in the first blend are hydrated; and wherein, if the moisture level of the solid milk product is to be less than about 25 percent, the emulsifying salt and the TiO₂ are added to the first blend after essentially all components in the first blend are hydrated;
(4) continuing to heat the second blend to the temperature of about 65 to about 95°C under the high shear conditions until a homogeneous paste is obtained;
(5) pasteurizing the homogenous paste; and
(6) cooling the pasteurized homogenous paste to form the solid milk product,
wherein the relative amount of the aqueous liquid, the edible fat, and the concentrated milk protein source in the first blend are adjusted such that the solid milk product has a moisture level of less than about 40 percent and a fat/protein ratio of less than about 2.5; and wherein the solid milk product is a solid at ambient temperatures.

In a preferred embodiment, the present invention provides a method for preparing a solid milk product, said method comprising:
(1) blending about 20 to about 50 percent condensed fat-free milk or sweetened condensed fat-free milk, about 10 to about 35 percent anhydrous milkfat, and about 8 to about 30 percent concentrated dry milk powder at a temperature of about 40 to about 95°C to form a first blend, wherein the blending continues until essentially all components in the first blend are hyd rated;
(2) heating the first blend to a temperature of about 60 to about 95°C under high shear conditions with a bulk peak shear rate of greater than about 950 sec⁻¹;
(3) adding 0 to 1 percent of an emulsifier to the first blend either before or after essentially all components in the first blend are hydrated;
(4) adding, once essentially all components in the first blend are hydrated, about 1 to about 3 percent of an emulsifying salt and about 0.4 to about 1 percent TiO₂ to the first blend to form a second blend;
(5) continuing to heat the second blend to the temperature of about 65 to about 95 °C under the high shear conditions until a homogeneous paste is obtained;
(6) pasteurizing the homogenous paste; and
(7) cooling the pasteurized homogenous paste to form the solid milk product,
wherein the solid milk product is a solid at ambient temperatures, has a moisture level of less than about 40 percent, and has a fat/protein ratio of less than about 2.5.

The present invention also provides a solid milk product comprising about 15 to about 60 percent of an aqueous liquid (preferably condensed fat-free milk or sweetened condensed fat-free milk); about 8 to about 40 percent of an edible fat (preferably anhydrous milkfat); about 1 to about 45 percent of a concentrated milk protein source (preferably concentrated dry milk powder); 0 to about 3 percent of an emulsifying salt; 0 to about 1 percent TiO₂; 0 to 1 percent of an emulsifier; and 0 to about 50 percent non-lactose sweetener,
wherein the solid milk product is a solid at ambient temperatures, has a moisture level of less than about 40 percent, and has a fat/protein ratio of less than about 2.5. Preferably, the solid milk product has a moisture level of about 10 to about 30 percent and a fat/protein ratio of less than about 2. More preferably, the solid milk product has a fat/protein ratio of about 0.5 to about 1.5 and, even more preferably, about 1 to about 1.2.

### Brief Description of the Drawings

Figure 1 provides a plot of moisture content versus fat/protein ratio comparing the solid milk product of the present invention with prior art products (i.e., Barta, U.S. Patent 4,497,834 (February 5, 1985) and Cillario, U.S. Patent 4,298,625 (November 3, 1981)).
Figure 2 is a flowchart illustrating the general process of the present invention. For solid milk products having a moisture level of greater than about 25 percent, the TiO₂ and emulsifying salts can be added either before or after essentially all components are hydrated. For solid milk products having a moisture level of less than about 25 percent, the TiO₂ and emulsifying salts should be added after essentially all components are hydrated.
Figure 3 is a flowchart illustrating a preferred embodiment of the process of the present invention wherein the TiO₂ and emulsifying salts are added after essentially all components are hydrated.
Figure 4 is a flowchart illustrating another preferred embodiment of the process of the present invention wherein the TiO₂ and emulsifying salts are added after essentially all components are hydrated.

### Detailed Description of the Invention

The present invention provides a method of preparing a solid milk product having a moisture level of less than about 40 percent and a fat/protein ratio of less than about 2.5, and preferably a moisture level of about 10 to about 30 percent and a fat/protein ratio of less than about 2. More preferably, the solid milk product has a fat/protein ratio about 0.5 to about 1.5 and, even more preferably, about 1 to about 1.2. The present solid milk product is a high solids, low moisture, high-protein, shelf-stable milk product which is solid at ambient temperatures. Thus, the present product can be conveniently transported and consumed by hand. Moreover, the present product can be produced in various forms - for example, solid bars, candy-type bars, cookies, cookies or bars with other ingredients (e.g., granola, grains, peanuts, other nuts, chocolate bits or chips, and the like), bite-sized forms or pieces, enrobed solid forms, shapes (e.g., animal, stars, letters), and the like - and can be produced with varying levels of sweetness. The present product can also be produced in an aerated form.

The solid milk product of the present invention contains an aqueous liquid; an edible fat; a concentrated milk protein source; 0 to about 3 percent of an emulsifying salt; 0 to about 1 percent TiO₂; 0 to 1 percent of an emulsifier; and 0 to about 50 percent non-lactose sweetener, wherein the solid milk product is a solid at ambient temperatures, has a moisture level of less than about 40 percent and has a fat/protein ratio of less than about 2.5. Preferably, the solid milk product has a moisture level of about 10 to about 30 percent and a fat/protein ratio of less than about 2. More preferably, the solid milk product has a fat/protein ratio of about 0.5 to about 1.5 and, even more preferably, about 1 to about 1.2. Suitable emulsifying salts include, for example, sodium citrate, potassium citrate, monosodium phosphate, disodium phosphate, trisodium phosphate, sodium aluminum phosphate, sodium tripolyphosphate, sodium hexametaphosphate, dipotassium phosphate, sodium acid pryrophosphate, and the like, as well as mixtures thereof. Sodium citrate, disodium phosphate, or mixtures thereof are the preferred emulsifying salts. Suitable emulsifiers include, for example, monoglycerides, diglycerides, polysorbates, sodium stearoyl lactylate, lecithin, and mixtures thereof as well as the like. Monoglycerides, diglycerides, sodium stearoyl lactylate, and mixtures thereof are the preferred emulsifiers. Preferably such emulsifiers are used in aerated solid milk products to improve the aeration process.

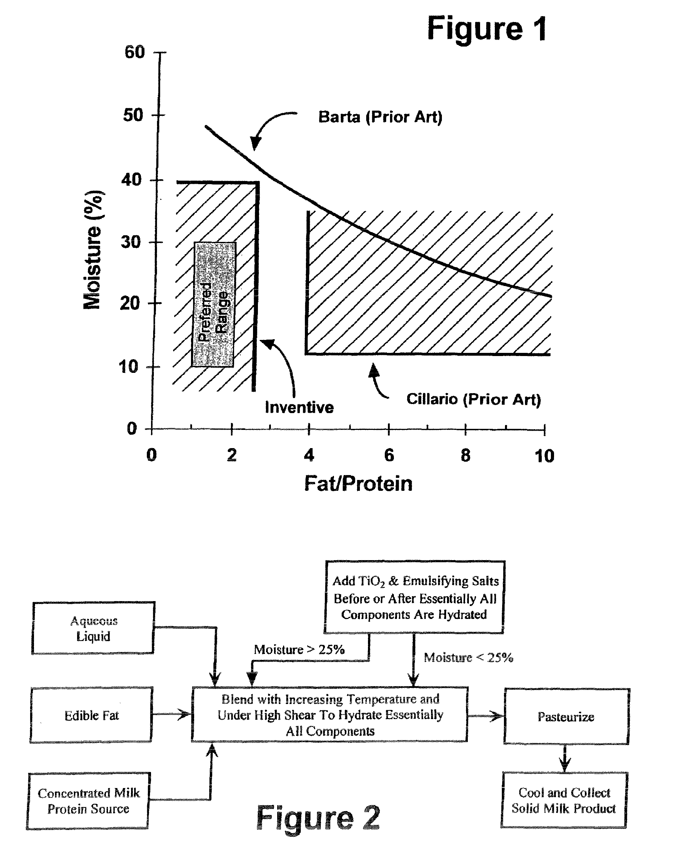

Figure 1 illustrates the relationship of the moisture level and the fat/protein level in the present solid milk product. Also included in Figure 1 are several prior art products which generally have significantly higher moisture levels and/or fat/protein ratios; these prior art products are described in the Background of the Invention above. Cross-hatching in Figure 1 generally indicates ranges of moisture and fat/protein ratio values for the specific products. As shown in Figure 1, the prior art has not been able to produce solid milk products having low moisture levels coupled with low fat/protein ratios as provided by the present invention.

A preferred solid milk product of the present invention contains about 20 to about 50 percent of an aqueous liquid (preferably condensed fat-free milk or sweetened condensed fat-free milk); about 10 to about 35 percent of an edible fat (preferably anhydrous milkfat); about 8 to about 30 percent of a concentrated milk protein source (preferably concentrated dry milk powder); 0 to about 3 percent of an emulsifying salt (preferably sodium citrate, disodium phosphate, or mixtures thereof); 0 to about 1 percent TiO₂; 0 to 1 percent emulsifier; and 0 to 50 percent non-lactose sweeteners. Typical formulations for the preferred solid milk product are provided in the following table:

| Component | General Range (%) | Preferred Range (%) | More Preferred Range (%) |
|---|---|---|---|
| Condensed Milk | 15 - 60 | 20 - 50 | 25 - 40 |
| Anhydrous Milkfat | 8 - 40 | 10 - 35 | 14 - 20 |
| Concentrated Dry Milk Powder | 1 - 45 | 8 - 30 | 12 - 25 |
| Emulsifying Salts | 0 - 3 | 1 - 2.5 | 1.5 - 2.5 |
| TiO₂ | 0 - 1 | 0.4-0.9 | 0.7-0.9 |
| Emulsifiers | 0 - 1 | 0.05 - 0.7 | 0.15 - 0.4 |
| Added Sweetener (non-lactose) | 0 - 50 | 12 - 35 | 25 - 35 |

Suitable emulsifying salts include, for example, sodium citrate, potassium citrate, monosodium phosphate, disodium phosphate, trisodium phosphate, sodium aluminum phosphate, sodium tripolyphosphate, sodium hexametaphosphate, dipotassium phosphate, sodium acid pyrophosphate, and the like, as well as mixtures thereof. Sodium citrate, disodium phosphate, or mixtures thereof are the preferred emulsifying salts. Suitable emulsifiers include, for example, monoglycerides, diglycerides, polysorbates, sodium stearoyl lactylate, lecithin, and mixtures thereof as well as the like. Monoglycerides, diglycerides, sodium stearoyl lactylate, and mixtures thereof are the preferred emulsifiers. Preferably such emulsifiers are used in aerated solid milk products. Suitable non-lactose sweeteners include, for example, sucrose, dextrose, fructose, glucose, maltose, honey, corn syrup, non-nutritive sweeteners, and the like. Sucrose is generally preferred.

The solid milk products of this invention are solid at ambient temperatures (i.e., about 22 to about 25°C), have moisture levels of less than about 40 percent, and have fat/protein ratios of less than about 2.5. Preferably, the solid milk products have moisture levels of about 10 to about 30 percent and a fat/protein ratio of less than about 2. More preferably, the solid milk product has a fat/protein ratio of about 0.5 to about 1.5 and; even more preferably, about 1 to about 1.2. Generally, the firmness or penetration of the unaerated solid milk product of this invention is greater than about 150 grams force, preferably about 150 to about 15,000 grams force, and more preferably about 1000 to about 10,000 grams force. Firmness can be measured using a universal testing machine in the penetration mode (e.g., Texture Technologies TA-XT2 using a 45° conical probe) or similar testing equipment. Generally, the overrun of the aerated solid milk product of this invention is about 5 to about 100 percent and more preferably about 15 to about 60 percent. Aerated solid milk products preferably contain about 0.05 to about 0.7 percent emulsifier, and more preferably about 0.15 to about 0.4 percent emulsifier. The solid milk products of the present invention are shelf stable. Generally, the solid milk products shelf-lives of at least about 3 months under ambient, non-refrigeration conditions and shelf-lives of at least about 7 months under refrigeration conditions.

Figure 2 illustrates a general process for preparing the solid milk product of the present invention. As shown in Figure 2, an aqueous liquid, an edible fat, and concentrated milk protein source are blended together. The relative amounts of the aqueous liquid, the edible fat, and concentrated milk protein source are adjusted to provide the desired moisture and fat/protein ratio in the solid milk product (i.e., moisture levels of less than about 40 percent, preferably about 10 to about 30 percent, and fat/protein ratios of less than about 2.5, preferably less than about 2, more preferably about 0.5 to about 1.5 and even more preferably about 1 to about 1.2). Suitable aqueous liquids include, for example, water, flavored water, fruit juice, liquid fruit concentrate, condensed milk, sweetened condensed milk, condensed fat-free milk, sweetened condensed fat-free milk, ultrafiltered milk, ultrafiltered skim milk, ultrafiltered/diafiltered milk, ultrafiltered/diafiltered skim milk, and mixtures thereof as well as the like. Preferably, the aqueous liquid is condensed milk, sweetened condensed milk, condensed fat-free milk, sweetened condensed fat-free milk, ultrafiltered milk, or ultrafiltered skim milk. More preferably, the aqueous liquid is condensed milk or condensed fat-free milk having about 30 to about 35 percent solids or sweetened condensed milk or fat-free sweetened condensed milk having about 70 to about 75 percent solids. More preferably, the sweetened condensed milk contains about 10 to about 50 percent sweetener selected from the group consisting of sucrose, dextrose, fructose, glucose, maltose, and non-nutritive sweeteners. The preferred sweetener is sucrose. The added sugars or sweeteners can be added separately or via the sweetened condensed milk. Preferably the sweeteners are added via the sweetened condensed milks. If added as a separate component, they are preferably added at the same time as the initial components.

Suitable edible fats include, for example, butter, cream, anhydrous milkfat, vegetable fats, coco butter, and mixtures thereof as well as the like. The edible fat should generally have a melting point less than about 50°C; more preferably, the edible fat has a melting point of about 35 to about 45°C. Preferably the edible fat is anhydrous milkfat. Preferably, the edible fat is melted prior to incorporation in the composition. Suitable concentrated milk protein sources include, for example, non-fat dry milk powder, milk protein concentrate, ultrafiltered milk protein concentrate, ultrafiltered/diafiltered milk protein concentrate, ultrafiltered milk protein paste, ultrafiltered/diafiltered milk protein paste, whey protein concentrate, caseinates, and mixtures thereof as well as the like. Generally, the concentrated milk protein source is a dry powder having about 40 to about 92 percent milk protein and, more preferably, about 65 to about 85 milk protein. Preferred concentrated milk protein sources are concentrated dry milk powders such as, for example, non-fat dry milk powders and dry milk protein concentrate powders. The most preferred concentrated milk protein source is dry milk protein concentrate powder because of its generally low lactose level. It is generally preferred that the lactose in the moisture phase of the solid milk product (as measured by lactose (%)/moisture (%) x 100) of the present invention is below about 19 percent and more preferably below about 16 percent. If desired, the desired relatively low lactose levels can be obtained by using components having low levels of lactose (e.g., ultrafiltered or, ultrafiltered/diafiltered milk components) or by treatment of one or more of the components or the sold milk product itself with, for example, an enzyme (e.g., lactase) to reduce the lactose levels.

The initial components (i.e., aqueous liquid, edible fat, and concentrated milk protein source) are blended with increasing temperature under high shear conditions in order to hydrate essentially all lactose in the composition. For purposes of this invention, "high shear conditions" require a bulk peak shear of greater than about 950 sec⁻¹; preferably the bulk peak shear is about 1000 to about 10,000 sec⁻¹. Blending and high shear continues until a homogenous paste is formed with essentially all components, including any lactose that may be present, are hydrated. For purposes of this invention, "essentially all components are hydrated" requires that at least 90 percent, and more preferably at least about 95 percent, of the components, including lactose that may be present in the composition, are hydrated. As those skilled in the art will realize, the time required to obtain essentially complete hydration will vary depending on the relative amounts of the components, the amount of water present, and mixing conditions (e.g., applied shear and temperature). Generally, a mixing time of about 1 to 10 minutes at a temperature of about 70 to about 75°C under high shear conditions is sufficient. In cases where sufficient hydration has not occurred, the low moisture solid milk product will tend to be "gritty." Of course, if such a gritty product is obtained, the blending or mixing time and/or the blending or mixing temperature can be increased.

Optional functional ingredients can be, and preferably are, incorporated into the solid milk products of this invention. These functional ingredients include emulsifying salts (preferably sodium citrate, disodium phosphate, and mixtures thereof), TiO₂, and, especially for aerated solid milk products, one or more emulsifiers such as monoglycerides, diglycerides, polysorbates, sodium stearoyl lactylate, and lecithin. Preferably at least one of these optional ingredients is incorporated into the compositions of this invention; more preferably, at least two of these optional ingredients are incorporated; even more preferably, especially if aerated solid milk products are desired, all of these just-listed optional ingredients are incorporated.

These optional functional ingredients are added to the first blend (i.e., aqueous liquid, an edible fat, and concentrated milk protein source) either before or after essentially all components in the first blend are hydrated. The particular timing of the addition of these optional function ingredients depends, at least in part, on the particular solid milk product being prepared. Generally, the emulsifier can be added either before or after essentially all components in the first blend are hydrated. The appropriate timing of the addition of the emulsifying salts and/or TiO₂, however, can vary depending on the total moisture level of the final solid milk product (see also Figure 2). If the moisture level of the solid milk product is to be greater than about 25 percent, the emulsifying salts and/or the TiO₂ can be added to the first blend either before or after essentially all components in the first blend are hydrated. If, however, the moisture level of the solid milk product is to be less than about 25 percent, the emulsifying salts and/or the TiO₂ should be added to the first blend after essentially all components in the first blend are hydrated. Generally, however and largely for process consideration, all of these optional functional ingredients are added after essentially all components in the first blend are hydrated.

TiO₂ acts as a whitener and also decreases the stretchability (i.e., less taffy like) of the solid milk product. Emulsifying salts generally improve textural properties. For example, sodium citrate generally provides better mouth-melting properties and disodium phosphate generally provides a firmer solid milk product. Suitable emulsifying salts include, for example, sodium citrate, potassium citrate, monosodium phosphate, disodium phosphate, trisodium phosphate, sodium aluminum phosphate, sodium tripolyphosphate, sodium hexametaphosphate, dipotassium phosphate, sodium acid pryrophosphate, and the like, as well as mixtures thereof. Sodium citrate, disodium phosphate, or mixtures thereof are the preferred emulsifying salts. The emulsifiers generally provide a smoother product; they also assist in preparing aerated solid milk products. Suitable emulsifiers include, for example, monoglycerides, diglycerides, polysorbates, sodium stearoyl lactylate, lecithin, and the like as well as mixtures thereof. Monoglycerides, diglycerides, sodium stearoyl lactylate, and mixtures thereof are the preferred emulsifiers.

Generally, the amounts of these optional ingredients are as follows: 0 to about 3 percent emulsifying salts; 0 to about 1 percent TiO₂; and 0 to 1 percent emulsifiers. Preferably, the amount of added emulsifying salts is about 1 to about 2.5 percent, the amount of added TiO₂ is about 0.4 to about 0.9 percent, and the amount of added emulsifiers is about 0.05 to 0.7 percent. More preferably, the amount of added emulsifying salts is about 1.5 to about 2.5 percent, the amount of added TiO₂ is about 0.7 to about 0.9 percent, and the amount of added emulsifiers is about 0.15 to 0.4 percent. Although added emulsifiers can be used in unaerated solid milk products, their use in aerated solid milk products is especially preferred.

Once these optional ingredients are added, blending under high shear conditions is continued until a homogenous paste is obtained. As those skilled in the art will realize, increasing the temperature during blending will decrease the time required to obtain the desired homogenous paste. Preferably, the temperature is increased up to about 80 to about 90°C. After the homogenous paste is obtained, the mixture is pasteurized using conventional techniques and then cooled, preferably to below about 40°C and more preferably below about 10°C, to form the solid milk product. If desired, the mixture can be homogenized before cooling. The solid milk product can be collected and packaged using conventional techniques. For example, the solid milk product can be filled into various containers or formed into solid bars, candy-type bars, cookies, cookies or bars with other ingredients (e.g., granola, grains, peanuts, other nuts, chocolate bits or chips, and the like), bite-sized forms or pieces, enrobed solid forms, shapes (e.g., animal, stars, letters), and the like - and can be produced with varying levels of sweetness. Shapes that appeal to children are especially preferred. The present product can also be produced in an aerated form.

If desired, other additives can be incorporated into the solid milk product of the present invention so long as these additives do not interfere or adversely effect the desired properties (i.e., firmness, water level, fat/protein ratio, and the like). Such additives include, for example, flavorants, fruits, nuts, colorants, stabilizers, emulsifiers, preservatives, additional nutrients, vitamins, mineral supplements (e.g., calcium fortification), and the like. If included, these additives generally constitute less than about 10 percent of the solid milk product. Such additives can be added either during the initial blending or after essentially all components have been hydrated. Preferably, solid additives are added during the high shear treatment and liquid additives are added during the initial blending. Of course, in cases where it is desired to maintain the physical integrity of the additives (e.g., fruit, nut, or grain pieces), the addition should be under low shear conditions only.

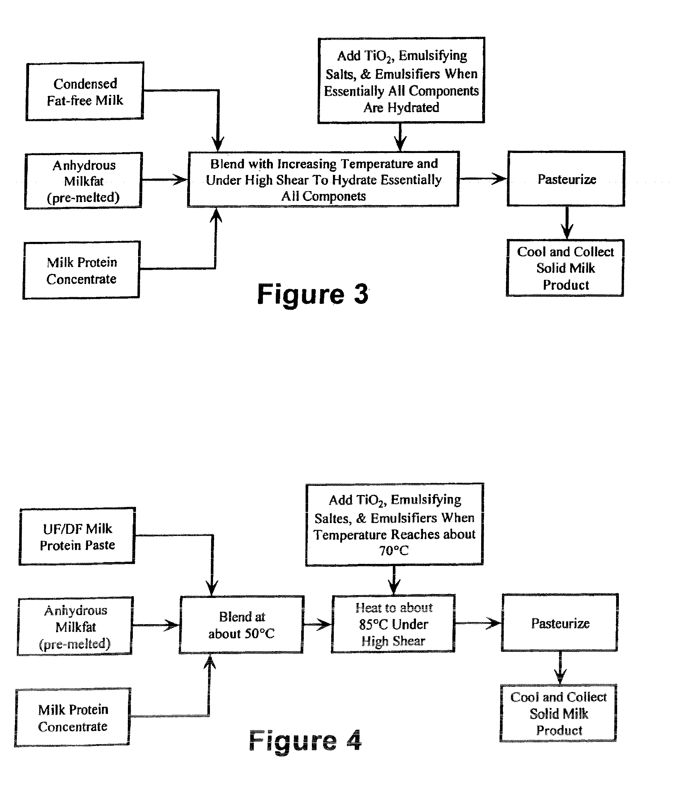

Figure 3 illustrates a preferred method for producing the solid milk product of this invention. Condensed milk or sweetened condensed milk, pre-melted anhydrous milkfat, and non-fat dry milk powder are blended at about 50°C and then heated up to about 85°C under high shear conditions. Once essentially all the lactose is hydrated (generally by the time the temperature reaches about 70 °C), the desired levels of sodium citrate, disodium phosphate, TiO₂, and/or emulsifiers are added. Mixing under high shear conditions is continued until a homogenous paste is obtained; normally such a homogeneous paste is obtained by the time the temperature reaches about 85°C. After pasteurization, homogenization (if desired), and cooling, the solid milk product can be collected and packaged.

The solid milk product of the present invention can be aerated if desired using conventional aeration techniques. For example, after pasteurization the product can be aerated using a gas such as, for example, air, nitrogen, or carbon dioxide. Generally, the aerated milk product of this invention has a density of less than about 9.5 g/ml as compared to about 10 to about 11 g/ml for the unaerated product. Aeration can be used to prepare solid milk products which resemble ice cream, yogurt, and the like. The following examples are included to illustrate the invention and not to limit it. Unless otherwise indicated, all percentages are by weight.
Example 1. A jacketed cooker equipped with a rotating agitator was heated to about 130°C. About 1.4 lbs [about 635 g] fat-free sweetened condensed milk, about 0.3 lbs [about 136 g] anhydrous milkfat (pre-melted), and about 0.3 lbs [about 136 g] non-fat dry milk powder were added to the cooker to form the base mixture. The temperature of the base mixture was allowed to rise from about 50 to about 85°C over a period of about 5 minutes under high shear conditions. The high shear conditions were provided using the rotating agitator at about 3000 rpm; the bulk peak shear was about 1100 sec⁻¹. Once the temperature reached about 85°C (i.e., after essentially all components are fully hydrated), about 0.02 lbs [about 9 g] TiO₂ was added to the base mixture while maintaining high shear. Heating and high shear was continued until the temperature returned to about 85°C. The product was pasteurized by holding the temperature at about 85°C for about 17 seconds. The consistency of the mixture was similar to a hot pudding. The resulting mixture was then cooled to below about 45°C to form the solid milk product having about 79 percent solids. The overall time from the initial heating step to cooling the final product was about 10 minutes.
Typical analytical data for various solid milk products, along with comparable data for liquid milk, are provided below:

| | Typical Liquid Milk | Solid Milk (75% Solids) | Solid Milk (80% Solids) |
|---|---|---|---|
| Fat | ∼3.8% | 14.8% | 14.1% |
| Protein | ∼3.2% | 12.2% | 12.0% |
| Lactose | ∼4.6% | 18.3% | 18.1% |
| Added Sweetener | 0 | 24.7% | 32.6% |
| Moisture | ∼87% | 25.0% | 20.3% |

The resulting product was firm (i.e., self-supporting) and could be molded into a variety of shapes. Water activity was about 0.7 to about 0.81. The product was smooth, melted in the mouth, and had a pleasant milky flavor.
Example 2. A similar experiment as described in Example 1 was carried out except that the bulk peak shear rate was only about 880 sec-1 (corresponding to an agitator speed of about 2400 rpm). The resulting product was gritty and grainy and was not considered acceptable.
Example 3. A similar experiment as described in Example 1 was carried out except that the moisture level was adjusted to be less than about 25 percent and the TiO₂ was added to the base mixture before the components were fully hydrated. The resulting product was gritty and was not considered acceptable.
Example 4. Using essentially the same procedures as described in Example 1, about 1.7 lbs [about 771 g] condensed skim milk (about 32 percent solids), about 0.66 lbs anhydrous milkfat, about 0.5 lbs [about 226 g] milk protein concentrate (Alapro 4700; New Zealand Milk Products), and about 1 lb [about 454 g] sucrose were mixed and heated to about 80°C over a period of about 10 minutes under high shear conditions. The high shear conditions were provided using a rotating agitator at about 3000 rpm; the bulk peak shear was about 1100 sec⁻¹. Once the temperature reached about 80°C (i.e., after essentially all components are fully hydrated), about 0.04 lbs [about 18 g] TiO₂ and about 0.09 lbs [about 41 g] sodium citrate were added. Heating under high shear was continued to about 85°C. The product was pasteurized by holding the temperature at about 85°F for about 30 seconds. The consistency of the mixture was similar to a hot process cheese. The resulting mixture was then cooled to below about 5°C to form the solid milk product having about 73 percent solids (i.e., moisture content of about 27 percent). The overall time from the initial heating step to cooling the final product was about 15 minutes. The resulting white solid milk product was firm (i.e., self-supporting), had a smooth, non-grainy texture, and dissolved rapidly in the mouth.
Example 5. Using essentially the same procedures as described in Example 1, about 37.4 lbs [about 16.96 kg] sweetened condensed skim milk (about 72 percent solids), about 5.6 lbs [about 2.54 kg] anhydrous milkfat, about 5.0 lbs [about 2.27 kg] non-fat dry milk, and about 0.08 lb [about 0.04 kg] monoglycerides and diglycerides (Dimodan) were mixed and heated to about 74°C over a period of about 5 minutes under high shear conditions. The high shear conditions were provided using a rotating agitator at about 3000 rpm; the bulk peak shear was about 1500 sec⁻¹. Once the temperature reached about 80°C (i.e., after essentially all components are fully hydrated), about 0.4 lbs [about 0.18 kg] TiO₂ and about 1 lb [about 0.45 kg] sodium citrate were added. Heating under high shear was continued at about 80°C for about 10 minutes. The consistency of the mixture was similar to a hot process cheese. The resulting mixture was then aerated using a roto-stator type aeration device with nitrogen gas. The aerated mixture was then cooled to below about 5°C to form the solid milk product having about 78 percent solids (i.e., moisture content of about 22 percent) and an overrun of about 16 to about 20 percent. The overall time from the initial heating step to cooling the final product was about 30 minutes. The aerated white solid milk product resembled ice cream in appearance, texture, and taste.
Example 6. Using essentially the same procedures as described in Example 1, about 53 percent ultrafiltered whole milk (low lactose with a moisture of about 55 percent), about 40 percent corn syrup solids (24DE), about 1 percent sodium citrate, about 0.8 percent TiO₂, about 0.7 percent salt, about 4.5 percent glycerol, and about 0.5 percent sodium stearoyl lactylate were blended to together and then subjected to a bulk peak shear of about 1350 sec⁻¹ for about 15 seconds. The resulting mixture was heated to about 82°C over about a 5 minute period. An unaerated solid milk product was obtained having about 70 percent solids, about 10.1 percent fat, about 7.95 percent protein, about 1.9 percent lactose, and about 39.5 percent added sugars. The product was firm, white, high in dairy flavor, and not too sweet.

## Claims

1. A solid milk product comprising about 15 to about 60 percent of an aqueous liquid, about 8 to about 40 percent of an edible fat; about 10 to about 35 percent of a concentrated milk protein source; 0 to about 3 percent of an emulsifying salt; 0 to about 1 percent TiO₂; and 0 to 1 percent of an emulsifier, wherein the solid milk product is a solid at ambient temperatures, has a moisture level of less than about 40 percent, and has a fat/protein ratio of less than about 2.5.

2. A solid milk product according to claim 1, where the aqueous liquid is condensed fat-free milk or sweetened condensed fat-free milk; wherein the edible fat is anhydrous milkfat; and wherein the concentrated milk protein source is non-fat dry milk powder.

3. A solid milk product according to claim 1 or claim 2, wherein the solid milk product has a moisture level of about 10 to about 30 percent and a fat/protein ration of less than about 2.

4. A solid milk product according to any one of claims 1 to 3, wherein the solid milk product has a moisture level of about 10 to about 30 percent and a fat/protein ratio of about 0.5 to about 1.5.

5. A solid milk product according to any one of claims 1 to 4, wherein the solid milk product contains about 20 to about 50 percent condensed fat-free milk or sweetened condensed fat-free milk; about 10 to about 35 percent anhydrous milkfat; about 8 to about 30 percent non-fat dry milk powder; about 1 to about 2.5 percent of the emulsifying salt; and about 0.4 to about 0.9 percent TiO₂.

6. A solid milk product according to claim 5, wherein the solid milk product is aerated and further comprising about 0.05 to 0.7 percent emulsifier.

7. A solid milk product according to any one of claims 1 to 6, further comprising up to about 35 percent added sweetener.

8. A method for preparing a solid milk product, said method comprising:
blending an aqueous liquid, an edible fat, and concentrated milk protein source at a temperature of about 40 to about 95°C and under high shear conditions with a bulk peak shear rate of greater than about 950 sec⁻¹ to form a first blend, wherein the blending continues until essentially all components in the first blend are hydrated and wherein the edible fat has a melting point less than about 50°C;
(2) adding 0 to 1 percent of an emulsifier to the first blend either before or after essentially all components in the first blend are hydrated;
(3) adding, once essentially all components in the first blend are hydrated, 0 to about 3 percent of an emulsifying salt and 0 to about 1 percent TiO₂ to form a second blend;
(4) continuing to heat the second blend to the temperature of about 65 to about 95°C under the high shear conditions until a homogeneous paste is obtained;
(5) pasteurizing the homogenous paste; and
(6) cooling the pasteurized homogenous paste to form the solid milk product, wherein the relative amount of the aqueous liquid, the edible fat, and the concentrated milk protein source in the first blend are adjusted such that the solid milk product has a moisture level of less than about 40 percent and a fat/protein ratio of less than about 2.5 and wherein the solid milk product is a solid at ambient temperatures.

9. A method for preparing a solid milk product, said method comprising:
(1) blending about 20 to about 50 percent condensed fat-free milk or sweetened condensed fat-free milk, about 10 to about 35 percent anhydrous milkfat, and about 8 to about 30 percent concentrated dry milk powder at a temperature of about 40 to about 95°C to form a first blend, wherein the blending continues until essentially all components in the first blend are hydrated;
(2) heating the first blend to a temperature of about 60 to about 95°C under high shear conditions with a bulk peak shear rate of greater than about 950 sec⁻¹.
(3) adding 0 to 1 percent of an emulsifier to the first blend either before or after essentially all components in the first blend are hydrated;
(4) adding, once essentially all components in the first blend are hydrated, about 1 to about 3 percent of an emulsifying salt and about 0.4 to about 1 percent TiO₂ to the first blend to form a second blend;
(5) continuing to heat the second blend to the temperature of about 65 to about 95°C under the high shear conditions until a homogeneous paste is obtained;
(6) pasteurizing the homogenous paste; and
(7) cooling the pasteurized homogenous paste to form the solid milk product,
wherein the solid milk product is a solid at ambient temperatures, has a moisture level of less than about 40 percent, and has a fat/protein ratio of less than about 2.5.

10. A method for preparing a solid milk product having a moisture level of less than about 40 percent, said method comprising:
(1) blending an aqueous liquid, an edible fat, and concentrated milk protein source at a temperature of about 40 to about 95°C and under high shear conditions with a bulk peak shear rate of greater than about 950 sec⁻¹ to form a first blend, wherein the blending continues until essentially all components in the first blend are hydrated and wherein the edible fat has a melting point less than about 50°C;
(2) adding 0 to about 1 percent of an emulsifier to the first blend either before or after essentially all components in the first blend are hydrated;
(3) added 0 to about 3 percent of an emulsifying salt and 0 to about 1 percent TiO₂ to the first blend to form a second blend; wherein, if the moisture level of the solid milk product is to be greater than about 25 percent, the emulsifying salt and the TiO₂ are added to the first blend either before or after essentially all components in the first blend are hydrated; and wherein, if the moisture level of the solid milk product is to be less than about 25 percent, the emulsifying salt and the TiO₂ are added to the first blend after essentially all components in the first blend are hydrated;
(4) continuing to heat the second blend to the temperature of about 65 to about 95°C under the high shear conditions until a homogeneous paste is obtained;
(5) pasteurizing the homogenous paste; and
(6) cooling the pasteurized homogenous paste to form the solid milk product,
wherein the relative amount of the aqueous liquid, the edible fat, and the concentrated milk protein source in the first blend are adjusted such that the solid milk product has a moisture level of less than about 40 percent and a fat/protein ratio of less than about 2.5; and wherein the solid milk product is a solid at ambient temperatures.

11. A method according to any one of claims 8 to 10, wherein the solid milk product has a moisture level of about 10 to about 30 percent and a fat/protein ratio of less than about 2 or
wherein the solid milk product has a moisture level of about 10 to about 30 percent and a fat/protein ratio of about 0.5 to about 1.5.

12. A method according to any one of claims 1 to 5, wherein the aqueous liquid is selected from water, flavored water, fruit juice, liquid fruit concentrate, condensed milk, sweetened condensed milk, condensed fat-free milk, sweetened condensed fat-free milk, ultrafiltered milk, ultrafiltered skim milk, ultrafiltered/diafiltered milk, ultrafiltered/diafiltered skim milk, and mixtures thereof; wherein the edible fat is selected from butter, cream, anhydrous milkfat, vegetable fats, coco butter, and mixtures thereof; and wherein the concentrated milk protein source is selected from non-fat dry milk powder, milk protein concentrate, ultrafiltered milk protein concentrate, ultrafiltered/diafiltered milk protein concentrate, ultrafiltered milk protein paste, ultrafiltered/diafiltered milk protein paste, whey protein concentrate, caseinates, and mixtures thereof.

13. A method according to any one of claims 1 to 6, wherein the solid milk product also contains an added sweetener at a level of up to about 35 percent and/or added sucrose at a level of up to about 35 percent.

14. A method according to any one of claims 8 to 13, wherein the first blend comprises about 20 to about 50 percent condensed fat-free milk or sweetened condensed fat-free milk, about 10 to about 35 percent anhydrous milkfat, and about 8 to about 30 percent non-fat dry milk powder or wherein the first blend comprises about 25 to about 40 percent condensed fat-free milk or sweetened condensed fat-free milk, about 14 to about 20 percent anhydrous milkfat, and about 12 to about 25 percent non-fat dry milk powder, and optionally wherein the amount of added emulsifying salt is about 1 to about 2.5 percent and the amount of added TiO₂ is about 0.4 to about 0.9 percent.

15. A method according to claim 14, wherein the solid milk product is aerated and the amount of added emulsifier is about 0.05 to 0.7 percent.
